# EUROPEAN PATENT APPLICATION

(11) **EP 1 705 408 A2**
(43) Date of publication of application: **27.09.2006**
(21) Application number: 06251609.1
(22) Date of filing: 24.03.2006
(51) Int. Cl.: F16H 63/38

(54) **Manual transmission**

(30) Priority: 25.03.2005 JP 2005089309
(71) Applicant: AISIN AI Co., Ltd., Nishio-shi, Aichi-ken (JP)
(72) Inventor: Tanaka, Takayuki, Nishio-shi Aichi-ken (JP)
(74) Representative: Smith, Peter James

(57) **Abstract**

A manual transmission includes: a shift and select shaft (7) moved for select and shift operations; an inner lever (2) fixed to the shift and select shaft; plural shift fork shafts (81/82/83) operatively associated with the inner lever based upon the select and shift operations; a biasing member (34) applying a biasing force to a lock ball (35) to come in contact with a recessed portion of the inner lever; and an interlock plate (4) held by the shift and select shaft and engageable with a shift fork shaft being different from a shift fork shaft (81/82/83) selected when the shift and select shaft implements the select movement. The interlock plate (4) prohibits the at least one shift fork shaft from being moved in the axial direction. The biasing member (34) is interposed between the interlock plate (4) and the lock ball (35).

## Description

### FIELD OF THE INVENTION

This invention generally relates to a manual transmission for a vehicle. More particularly, this invention pertains to an operation control unit of a manual transmission for a vehicle.

### BACKGROUND

A vehicle, which is driven by a power source such as an engine, an electric motor and so on, is incorporated with a transmission which contributes to generate speed and driving force of a vehicle which respectively alters in response to a condition of a road. A transmission is in general represented by a manual transmission, an automated manual transmission, an automatic transmission, a continuously variable transmission, and so on. A manual transmission incorporates therein an input shaft; an output shaft; plural shift gears mounted on the shafts; synchromesh mechanisms which respectively serve for engaging a pair of shift gears from among the plural shift gears so that the pair of shift gears rotates in a synchronizing manner; an operation control unit for controlling an operation of each synchromesh mechanism. In response to a shift operation implemented by a driver of a vehicle, a certain pair of shift gears is engaged and a predetermined shift stage corresponding to the certain pair of shift gears is established in the transmission, thereby enabling to drive a vehicle.

The operation control unit is mainly configured with a shift lever, a shift and select shaft, an inner lever, shift fork shafts, sleeves and so on, as disclosed in JP2002-139147A (hereinafter, reference 1). When a driver of a vehicle operates the shift lever, one of synchromesh mechanisms engages a pair of shift gears, wherein a driving force of a driving power source is transmitted, at a predetermined speed change ratio, to an output shaft of a transmission. The reference 1 further discloses a lock ball mechanism operatively associated with the inner lever. The lock ball mechanism is in general mainly configured with a recessed portion formed at the inner lever, a lock ball which is in contact with the recessed portion of the inner lever while the inner lever is being positioned at a neutral position, and deviates from the recessed portion when the inner lever is moved towards a shift position, a biasing member for biasing the lock ball towards the recessed portion of the inner lever, and so on. The lock ball mechanism usually maintains the inner lever at the neutral position, while, when a vehicle drives, the lock ball mechanism contributes to return the inner lever from a shift position to the neutral position with high reliability.

Such sort of transmission as described above is on occasions provided with an interlock plate. An interlock plate is held by the shift and select shaft and is operative in synch with one of an axial movement of the shift and select shaft and a rotatable movement thereof. The interlock plate is formed to be engaged, in response to the one of movement, with a shift head of fork shafts that were not selected. Therefore, because the interlock plate is not allowed to implement the other movement (the axial movement or the rotatable movement), the interlock plate prevents the not-selected fork shafts from being erroneously operated for a shift operation.

Going back to the lock ball mechanism disclosed in the reference 1, a spring as the biasing member is interposed between the lock ball and a transmission case. In such circumstances, a biasing force of the spring is applied across the shift and select shaft via the lock ball and the inner lever and is unnecessarily transmitted to a bearing portion of the shift and select shaft. Therefore, a degree of sliding resistance of the shift and select shaft in an axial direction is undesirably increased, which deteriorates a feeling of a shift operation that is given to a driver. Further, a shift operation of the fork shaft selected by the inner lever, i.e., by the shift and select shaft, leads to creation of a certain degree of play as for the inner lever. Therefore, the shift lever, which is operatively linked to the inner lever, is influenced by the play. In such case, the driver, which operates the shift lever manually, is on occasions not well delivered with a feeling of a shift operation of a shift stage being established in the transmission.

The present invention has been made in view of the above circumstance, and provides a manual transmission according to which an operation of a shift lever is more smoothed so that an operator of the shift lever obtains an improved feeling of a shift operation, and an operation control unit contributes to distinguish more accurately a shift stage being established.

### SUMMARY

According to an aspect of the present invention, a manual transmission includes: a shift and select shaft either moved in an axial direction or rotated about its axis for a select movement and either moved in the axial direction or rotated about its axis for a shift movement; an inner lever fixed to the shift and select shaft and having a recessed portion; and plural shift fork shafts arranged in parallel with one another. A shift fork shaft is selected from among the plural shift fork shafts and is operatively associated with the inner lever based upon the select movement of the shift and select shaft. The selected shift fork shaft is moved in an axial direction by the inner lever based upon the shift movement of the shift and select shaft. The manual transmission further includes: a lock ball configured to come in contact with the recessed portion of the inner lever; a biasing member applying a biasing force to the lock ball; and an interlock plate held by the shift and select shaft and engageable with at least one shift fork shaft being different from the selected shift fork shaft when the shift and select shaft implements the select movement. Therefore, the interlock plate prohibits the at least one shift fork shaft from being operated in the axial direction. In the manual transmission described above, the biasing member is interposed between the interlock plate and the lock ball. That is to say, the biasing member takes its purchase from the interlock plate to apply its bias to the ball. In order to apply its bias action on the ball, the biasing member takes its reaction from the interlock plate and not from the transmission case.

The inner lever is fixed to the shift and select shaft and is operative integrally with the shift and select shaft along with an axial movement of the shift and select shaft and a rotation thereof. The inner lever operates one of the plural shift fork shafts for a select operation when the inner lever is operated by one of the axial movement and the rotation about its axis. The inner lever further operates the shift fork shaft selected for a shift operation when the inner lever is operated by the other one. For example, shift heads, which are respectively configured with a pair of protrusions, are attached to the respective shift fork shafts and are aligned. When the inner lever is moved in the axial direction, an insertion portion of the inner lever is inserted into the pair of protrusions of the shift head of one of the shift fork shaft. This is referred to as a select operation. Under such circumstances, when the inner lever rotates about its axis in a right or left direction, the insertion portion of the inner lever moves the shift head of the selected shift fork shaft in a right or left direction. This is referred to as a shift operation. The inner lever is maintained at a neutral position before the shift operation. If the shift head is attached to each shift fork shaft in an opposite direction to the above described, the select operation can be implemented by the inner lever rotated about its axis, while the shift operation can be implemented by the inner lever moved in the axial direction.

The interlock plate is held by the shift and select shaft in such a manner that the interlock plate is allowed to operate only in sync with or only along with one of the axial movement of the shift and select shaft and the rotation thereof and is prohibited from operating for the other one thereof. For example, the interlock plate can be mounted on a bearing equipped around the shift and select shaft. In such circumstances, the interlock pate and the shift and select shaft move integrally in an axial direction and yet rotate separately about their axes. Therefore, by prohibiting the interlock plate from rotating about its axis such as by means of a rotation-prohibiting member, it is possible to rotate only the shift and select shaft. As another example, the interlock plate can be mounted on the shift and select shaft in such a manner that the interlock plate is fitted into grooves of the shift and select shaft and is slidably movable in an axial direction. In such circumstances, the interlock plate and the shift and select shaft rotate integrally about their axes and yet move separately in an axial direction. Therefore, it is possible to move only the shift and select shaft by prohibiting the interlock plate from moving in the axial direction.

The interlock plate can include pawls, which are engaged with at least one shift fork shaft not selected and prohibit the shift fork shaft from a shift operation. The pawls can be engaged with the shift head of the not-selected shift fork shaft both sides of an insertion portion of the inner lever. According to this structure, when the insertion portion of the inner lever implements the shift operation to move the selected shift fork shaft, the shift head of a shift fork shaft apart from the selected shift fork shaft is engaged with the pawls of the interlock plate. Therefore, the interlock plate, which is prohibited from being operated for a shift operation, can prohibit the shift operation of the not-selected shift fork shaft.

The lock ball is an approximately spherical member and can be made of a material such as metal or resin, a material having for example a less wastage due to friction. The lock ball can be designed so as to fit into the recessed portion of the inner lever at a neutral position. The biasing member is positioned between the interlock plate and the lock ball and biases the lock ball towards the recessed portion of the inner lever. Therefore, the inner lever can be maintained to be stationary at the neutral position. On the other hand, upon the shift operation, it is necessary that the inner lever operate so as to push the lock ball out of the recessed portion. Therefore, it is preferable that the biasing force of the biasing member is ensured at an appropriate level that is sufficient not to enlarge a degree of operation force required to a driver. The biasing member can be represented by a spring and so on. Further, in order to prevent the lock ball and the biasing member from dropping, a housing member can be provided insofar as the housing member does not interrupt the contact between the lock ball and the recessed portion of the inner lever and a biasing of the biasing member against the lock ball.

According to the structure described above, the biasing member pushes the lock ball on the basis of the housing member or the interlock plate held by the shift and select shaft. This biasing force is transmitted back to the interlock plate via the lock ball, the inner lever and the shift and select shaft, wherein some other members apart from the shift and select shaft are not operatively associated with the biasing force. To the contrary, according to a conventional method, a biasing member applied a biasing force to a lock ball on the basis of a transmission case. Such biasing member undesirably generated a force that pushes sidewise the shift and select shaft against a bearing. According to the invention, this sort of sidewise pushing does not occur and a sliding resistance is not increased when the shift and select shaft operates.

If an amount of play in a select direction is large when the inner lever operates the shift fork shaft for a shift operation, a shift lever, which is positioned at a shift stage and is influenced by the play, may lead a driver to erroneously recognize a shift stage being actually engaged. The inner lever can include at least one engaging means for reducing an amount of play of the inner lever. The engaging means can include a pair of protrusions attached to the inner lever and an engaging pin that is attached to the side of a transmission case and is inserted into the pair of protrusions. The pair of protrusions can be designed for example in such a manner that a large amount of play is ensured because the engaging pin is not inserted into the pair of protrusions when the inner lever is positioned at a neutral position and an amount of play in a select direction can be reduced when the inner lever is at a shift position. In such case, when the inner lever is maintained at the neutral position, it is possible to ensure a sufficient amount of play and to smooth a shift operation. On the other hand, when the inner lever is positioned at a shift position, such play is reduced, which leads to reduction in an amount of play of a shift lever operatively linked to the inner lever. Therefore, it is possible to recognize more accurately a shift stage being actually selected.

The interlock plate can include a guide portion. The guide portion is engaged with a guide member so as to allow the interlock plate either to move in an axial direction or to rotate about its axis and so as not to allow the interlock plate either to move in the axial direction or to rotate about its axis. In this case, the guiding pin can be mounted on the guide member. While the guide portion is provided at the interlock plate, it is possible to employ the guide member provided at the side of the transmission case. Such guide can be a guide groove that is notched along a direction in which a movement of the interlock plate is allowed. The guide member can be a guide projection that is fitted into the guide groove of the interlock plate. Therefore, the interlock plate can be allowed to operate only in a specific direction in response to an engagement between the guide projection and the guide groove.

The engaging pin, which is inserted into the pair of protrusions of the inner lever, can be mounted at the guide member, i.e., the guide projection. In such circumstances, it is possible to arrange each component with a high efficiency in using a space, and it does not newly require places to position them. Therefore, any modifications of the structure or size of a conventional manual transmission is not need and the present invention can be applied.

### BRIEF DESCRIPTION OF THE DRAWINGS

The foregoing and additional features and characteristics of the present invention will become more apparent from the following detailed description considered with reference to the accompanying drawings, wherein:

Fig. 1 is a horizontally taken cross sectional view of a manual transmission according to an embodiment of the present invention;

Fig. 2 is a vertically taken cross sectional view of the manual transmission according to the embodiment of the present invention;

Fig. 3 is a horizontally taken cross sectional view enlarging a vicinity of an inner lever illustrated in Fig. 1;

Fig. 4 is a vertically taken cross sectional view enlarging the vicinity of the inner lever;

Fig. 5A is an aerial view illustrating an interlock plate illustrated in Fig. 1;

Fig. 5B is a sectional view taken along line A-A in Fig. 5A; and

Fig. 6 is a horizontally taken cross sectional view enlarging the vicinity of the inner lever operated for a shift operation.

### DETAILED DESCRIPTION

An embodiment of the present invention will be described hereinbelow in detail with reference to the accompanying drawings.

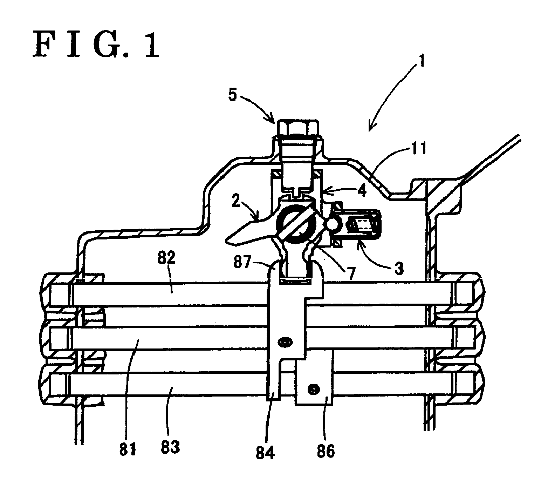

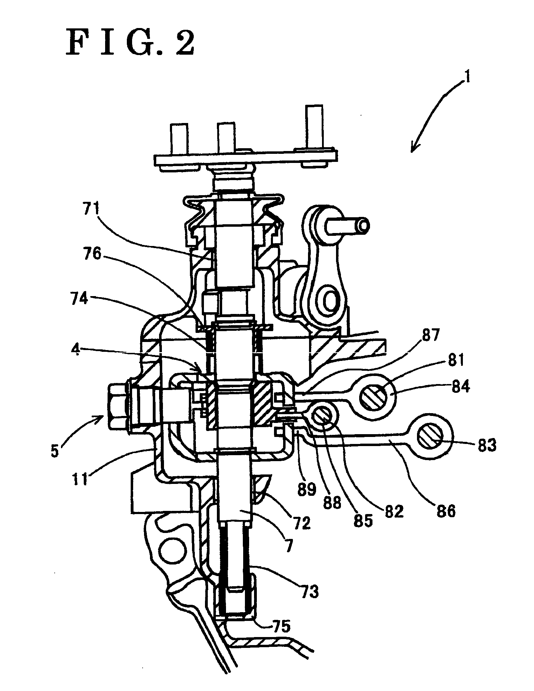

As illustrated in Fig. 1, a manual transmission 1 according to the embodiment of the present invention includes at least three shift fork shafts 81, 82, 83, a shift and select shaft 7, an inner lever 2, a lock ball mechanism 3, an interlock plate 4, and a guide member 5. The shift fork shaft 81 contributes to select a fifth or reverse shift stage, the shift fork shaft 82 contributes to select a third or fourth shift stage, and the shift fork shaft 83 contributes to select a first or second shift stage. Each shift fork shaft 81, 82 and 83 is provided with a sleeve for driving a synchromesh mechanism (not illustrated) and each shift head 84, 85 and 86, and is supported by a transmission case 11 so as to movable in an axial direction. As is illustrated in Fig. 2, one end of each shift head 84, 85 and 86 is fixed to each shift fork shaft 81, 82 and 83 so as to surround each, while the other end of each shift head is formed with each engagement head 87, 88 and 89. Each engagement head 87, 88 and 89 is formed with a pair of protrusions arranged horizontally in parallel and is aligned in place in a vertical direction. Once one of the engagement heads 87, 88 and 89 is selected by the inner lever 2, the shift fork shaft having the selected engagement head is moved in an axial direction for a shift operation. The sleeve corresponding to the selected shift fork shaft is operated so as to establish a certain shift stage.

Meanwhile, the shift and select shaft 7 extends in a substantially vertical direction and is rotatably supported by metal-made bushings 71 and 72 that are equipped at the side of the transmission case 11. The shift and select shaft 7 reciprocates up and down by virtue of a spring 73. A spring receiving portion 75, which is placed at the side of the transmission case 11 and at the side of a bottom end of the shift and select shaft 7, contributes to receive a vertically reciprocating shift and select shaft 7. Further, the shift and select shaft 7 reciprocates up and down by virtue of a spring 74. A spring receiving portion 76, which is placed at the side of the transmission case 11 and at an upper side of the interlock plate 4, contributes to receive the vertically reciprocating shift and select shaft 7. In response to a manual operation of a shift lever (not illustrated) by a driver, the shift and select shaft 7 operates axially in a vertical direction and rotates about its axis.

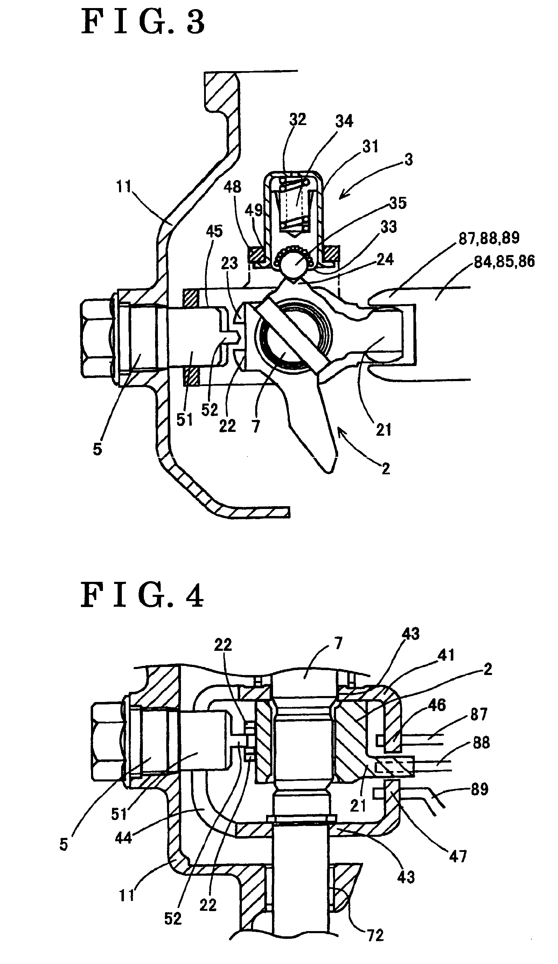

As illustrated in Figs. 3 and 4, the inner lever 2 is an approximately cylindrically shaped member that is integrally fixed to an axial intermediate of the shift and select shaft 7. The inner lever 2 is formed with an insertion head 21 that projects towards the engagement heads 87, 88 and 89. The inner lever 2 moves up and down integrally along with an up-and-down movement of the shift and select shaft 7. The insertion head 21 is inserted into the engagement head 87 in response to an upward movement of the inner lever 2. Likewise, when the inner lever 2 is moved to a vertically intermediate or downwards, the insertion head 21 is inserted into the engagement head 88 or 89. If the inner lever 2 rotates integrally with the shift and select shaft 7 in a condition where the insertion head 21 is being inserted, the insertion head 21 contributes to move the engagement head 87 (or 88/89) in a left or right direction (in an up or downward direction in Fig. 3) so as to implement a shift operation.

At a side of the inner lever 2 opposite to the insertion head 21, there are two engagement portions 22 and 23 extending towards the transmission case 11. Each engagement portion 22 and 23 includes a pair of protrusions, protrusions which are spaced therebetween in a vertical direction and extend horizontally. As is apparent from Fig. 3, a recessed portion 24 is formed at the inner lever 2 between the insertion head 21 and the engagement portion 22, the recessed portion 24 which operatively comes in contact with a lock ball 35.

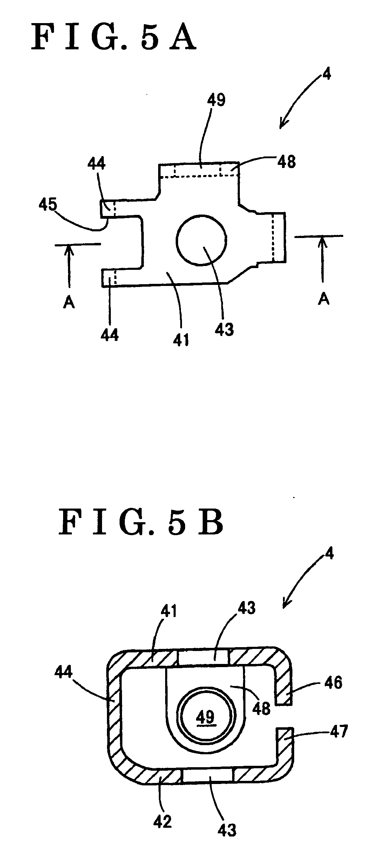

As illustrated in Figs. 5A and 5B, the interlock plate 4 is formed with an upper wall 41, a bottom wall 42, through holes 43 which are defined respectively at the upper wall 41 and the bottom wall 42, a connecting portion 44 which connects one end of the upper wall 41 with one end of the bottom wall 42. The shift and select shaft 7 is rotatably held through the through holes 43 of the interlock plate 4. In order to house the inner lever 2 in place between the upper wall 41 and the bottom wall 42, the connecting portion 44 is positioned near the transmission case 11 and away from the shift and select shaft 7. The connecting portion 44 is notched in a vertical direction so as to form a guide portion 45.

At the other ends of the upper wall 41 and the bottom wall 42, which are not connected by the connecting portion 44, there are pawls 46 and 47 formed at the upper wall 41 and the bottom wall 42, pawls 46 and 47 which face the engagement heads 87, 88 and 89, and are bent in a direction to face each other. The insertion head 21 of the inner lever 2 is positioned between the pawls 46 and 47. A dimension of each pawl 46 and 47 in a direction in parallel with the axial direction of the shift fork shafts is designed to be smaller than an interval between the pair of protrusions of each engagement head 87, 88 and 89. The pawls 46 and 47 are hence engaged with two of the three engagement heads 87, 88 and 89, two engagement heads which are not inserted with the insertion head 21. Fig. 4 illustrates a state in which: 1) the shift fork shaft 82 for the third and forth shift stages is selected, and the insertion head 21 is inserted into the pair of protrusions of the engagement head 88 of the shift fork shaft 82; 2) the pawl 47 is inserted into the pair of protrusions of the engagement head 89 of the shift fork shaft 83 for the first and second shift stages; and 3) the pawl 46 is inserted into the pair of protrusions of the engagement head 87 of the fork shaft 81 for the fifth and reverse shift stages.

Going back to Fig. 3, the interlock plate 4 includes a holding plate 48 that faces the recessed portion 24 of the inner lever 2 and extends downwardly from the upper wall 41 of the interlock plate 4. The holding plate 48 is formed with a holding hole 49 at an intermediate thereof so as to hold the lock ball mechanism 3.

As is apparent from Fig. 3, the lock ball mechanism 3 is mainly configured with a housing cylinder 31, a coil spring 34 corresponding to a biasing member, and the lock ball 35. As the housing cylinder 31, a cylindrically shaped member, one end of which is closed with a bottom 32 and the other end of which is open with an opening end 33, is employed. The housing cylinder 31 is oriented with the opening end 33 facing the recessed portion 24 of the inner lever 2 and is maintained to be substantially horizontal by the holding hole 49 of the holding plate 48. The coil spring 34 is housed inside the housing cylinder 31, and the lock ball 35 is arranged in place between the coil spring 34 and the inner lever 2. According to the embodiment of the present invention, the housing cylinder 31, in which the coil spring 34 is housed, is mounted on the interlock plate 4. Alternatively or in addition, the housing cylinder 31 can be integrally formed with the interlock plate 4, in other words, the interlock plate 4 can include the housing cylinder 31. Also in this case, the lock ball 35 is positioned between the coil spring 34 and the inner lever 2.

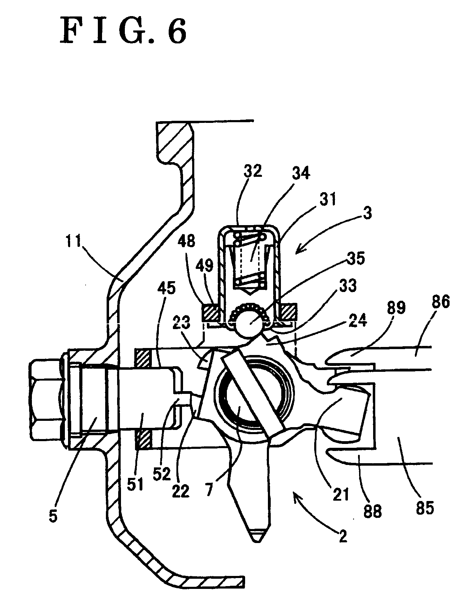

When the inner lever 2 is not operated for a shift operation and is maintained at a neutral position, as illustrated in Fig. 3, the lock ball 35 is in contact with the recessed portion 24 of the inner lever 2. When the inner lever 2 is rotated and is moved towards a shift position, as illustrated in Fig. 6, the lock ball 35 deviates from the recessed portion 24 of the inner lever 2, i.e., the contact between the lock ball 35 and the recessed portion 24 is discontinued. Meanwhile, the coil spring 34 pushes the lock ball 35 towards the inner lever 2 based on the bottom 32 of the housing cylinder 31. Therefore, in order to disengage the lock ball 35 from the recessed portion 24, an operation force against a biasing force of the coil spring 34 is required up to a certain degree. In the light of the foregoing, unless the inner lever 2 is applied with a certain degree of the operation force, the inner lever 2 maintained to be stationary at the neutral position. On the other hand, as to an operation to return the inner lever 2 from a shift position to the neutral position, it is possible to recognize with high reliability the inner lever 2 returned to the neutral position, and it is possible to facilitate an operation to return the inner lever 2 to the neutral position.

Going back to Fig. 3, the guide member 5 is an approximately cylindrical member protruding from the transmission case 11 towards the interlock plate 4. A tip end portion 51 of the guide member 5 is fitted into the guide portion 45 of the interlock plate 4 and allows the interlock plate 4 to move only in a vertical direction, i.e., only in an axial direction of the shift and select shaft 7. In other words, by virtue of the configuration of the guide member 5 and the guide portion 45 of the interlock plate 4, a rotational movement of the interlock plate 4 can be prohibited. Therefore, the shift fork shafts, which are engaged with the interlock plate 4, can be also prohibited from a shift operation. The guide member 5 and the guide portion 45 serve as an operation prohibiting means. An engagement pin 52, which is integrated at an intermediate of the tip end portion 51 of the guide member 5, projects substantially horizontally. The engagement pin 52 is provided in place at the tip end portion 51 so as to position between the engagement portions 22 and 23 when the inner lever 2 is at the neutral position. The engagement pin 52 is not necessarily provided at the guide member 5 as far as the engagement pin 52 can be positioned between the engagement portions 22 and 23 when the inner lever 2 is at the neutral position.

When the shift head 88 of the shift fork shaft 82, which is interposed in a vertical direction between the shift fork shafts 81 and 83, is operated for a shift operation in response to a rotation of the inner lever 2, the engagement portions 22 and 23 are also rotated as illustrated in Fig. 6. In such circumstances, the engagement pin 52 is inserted between the pair of protrusions of the engagement portion 22 (or 23). On the other hand, when the shift fork shaft 81 or 83 is operated for a shift operation in response to a rotation of the inner lever 2, the engagement pin 52 is positioned vertically outside of the pair of protrusions.

As described above, in the manual transmission 1 according to the embodiment of the present invention, the coil spring 34 of the lock ball mechanism 3 applies a biasing force to the lock ball 35 on the basis of the bottom 32 of the housing cylinder 31 mounted on the interlock plate 4. This biasing force of the coil spring 34 is transmitted back to the interlock plate 4 via the lock ball 35, the inner lever 2 and the shift and select shaft 7. In other words, the biasing force of the coil spring 24 is not transmitted to the transmission case 11 after being transmitted to the interlock plate 4 via the lock ball 35, the inner lever 2 and the shift and select shaft 7. The biasing force of the coil spring 34 hence does not influence on an exterior of the shift and select shaft 7 and is not associated with other portions apart from the shift and select shaft 7. Accordingly, the shift and select shaft 7 can be avoided from pushing sidewise against the metal-made bushings 71 and 72, the sidewise pushing which undesirably occurred according to a conventionally known structure. As a result, a degree of sliding resistance of the shift and select shaft 7 is effectively reduced or small, a manual operation of the shift lever by a driver can be more smoothed, wherein the driver can obtain a better feeling of a shift operation.

As further described above, in the manual transmission 1 according to the embodiment of the present invention, when the shift fork shaft 82 is selected and a third or fourth shift stage is established in the transmission 1, the engagement pin 52 is inserted into the pair of protrusions of the engagement portion 22 (or 23). In such case, an amount of play of the inner lever 2 is reduced, and an amount of play of the shift lever (not illustrated), which is operatively linked to the inner lever 2, is reduced. Therefore, it is possible to recognize a shift stage being established in the transmission 1 with better reliability. Meanwhile, when one of the shift fork shafts 81 and 83 is selected, one of the springs 73 and 74 flexibly extends and the other one thereof flexibly contracts, wherein a degree of resilience is applied to the shift and select shaft 7. Therefore, such play of the inner leer 2 and the shift lever are not created. The engagement pin 52 and the engagement portions 22 and 23 have an effect especially on the shift fork shaft 82 which is interposed between the shift fork shafts 81 and 83, the shift fork shaft 82 on which a relatively large play arises.

As described above, the manual transmission according to the embodiment of the present invention is characterized in an operation control unit for controlling a shift operation. The operation control unit includes the shift and select shaft 7, the inner lever 2, the shift fork shafts 81/82/83, the sleeves and so on. An input shaft (not illustrated), an output shaft (not illustrated), speed change gears, synchromesh mechanisms and so on can be identical to conventional types.

The principles, the preferred embodiment and mode of operation of the present invention have been described in the foregoing specification. However, the invention, which is intended to be protected, is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. A manual transmission comprising:
a shift and select shaft (7) either moved in an axial direction or rotated about its axis for a select movement and either moved in the axial direction or rotated about its axis for a shift movement;
an inner lever (2) fixed to the shift and select shaft (7) and operative integrally with the shift and select shaft (7), the inner lever (2) having a recessed portion (24);
plural shift fork shafts (81/82/83), a shift fork shaft selected from among the plural shift fork shafts (81/82/83) and operatively associated with the inner lever (2) based upon the select movement of the shift and select shaft (7), the selected shift fork shaft being moved in an axial direction by the inner lever (2) based upon the shift movement of the shift and select shaft (7);
a lock ball (35) configured to come in contact with the recessed portion (24) of the inner lever (2);
a biasing member (34) applying a biasing force to the lock ball (35); and
an interlock plate (4) held by the shift and select shaft (7) and engageable with at least one shift fork shaft being different from the selected shift fork shaft (81/82/83) when the shift and select shaft (7) implements the select movement, wherein the interlock plate (4) prohibits the at least one shift fork shaft (81/82/83) from being moved in the axial direction, the manual transmission **characterized in that** the biasing member (34) is interposed between the interlock plate (4) and the lock ball (35).

2. A manual transmission according to claim 1, wherein the inner lever (2) includes at least one engaging means (22/23, 51) for reducing an amount of play of the inner lever in case where the selected shift fork shaft (81/82/83) is moved from a neutral position to a shift position.

3. A manual transmission according to claim 2, wherein the engaging means (22/23, 51) includes at least one pair of protrusions (22/23) and an engaging pin (51) which is inserted in between the pair of protrusions (22/23).

4. A manual transmission according to any preceding claim, further comprising:
operation prohibiting means for prohibiting the interlock plate from operating along with the shift movement of the shift and select shaft (7).

5. A manual transmission according to claim 4, wherein the operation prohibiting means includes:
a guide portion (45) formed at the interlock plate (4); and
a guide member (5) engaged with the guide portion (45) so as to prohibit the interlock plate (4) from being operated along with the shift movement of the shift and select shaft (7).

6. A manual transmission according to claim 5, wherein the guide member (5) is provided at the interlock plate (4).

7. A manual transmission according to claim 5, wherein the guide member (5) is provided at a transmission case (11).

8. A manual transmission according to claim 6 or 7, wherein the engaging pin (51) is provided at the guide member (5).

9. A manual transmission according to any preceding claim, wherein the interlock plate (4) includes a housing (31) that houses therein the biasing member (34) which pushes the lock ball (35) against the recessed portion (24) of the inner lever (2).
